# EUROPEAN PATENT APPLICATION

(11) **EP 4 459 194 A1**
(43) Date of publication of application: **06.11.2024**
(21) Application number: 22913353.3
(22) Date of filing: 29.07.2022
(51) Int. Cl.: F24F 1/0063, F24F 1/0083, F24F 7/08, F24F 11/54, F24F 11/64, F24F 11/72, F24F 13/30, F24F 110/10, F24F 110/20

(54) **FRESH AIR ALL-IN-ONE MACHINE**

(30) Priority: 29.12.2021 CN 202111634628; 29.12.2021 CN 202123357569 U; 29.12.2021 CN 202123353801 U; 29.12.2021 CN 202123353841 U
(71) Applicant: Qingdao Hisense Hitachi Air-Conditioning Systems Co., Ltd., Qingdao, Shandong 266555 (CN)
(72) Inventor: CHI, Lihua, Qingdao, Shandong 266555 (CN); MENG, Qinghao, Qingdao, Shandong 266555 (CN); DU, Yong, Qingdao, Shandong 266555 (CN); WANG, Zhen, Qingdao, Shandong 266555 (CN); YANG, Moxuan, Qingdao, Shandong 266555 (CN); ZHOU, Zhigang, Qingdao, Shandong 266555 (CN)
(74) Representative: Casalonga
(86) International application number: PCT/CN2022/109190
(87) International publication number: WO 2023/124066

(57) **Abstract**

Some embodiments of the present disclosure provide a fresh air all-in-one machine, comprising a machine shell, a fresh air channel, a circulating air channel, an air mixing cavity, a first heat exchanger, a second heat exchanger, and a third heat exchanger. An inlet end of the fresh air channel is communicated with the outside, and an outlet end of the fresh air channel is communicated with a first end of the air mixing cavity. The fresh air channel is configured to guide outdoor air into the air mixing cavity. An inlet end of the circulating air channel is communicated with the interior, and an outlet end of the circulating air channel is communicated with a second end of the air mixing cavity. The circulating air channel is configured to guide indoor air into the air mixing cavity. A third end of the air mixing cavity is communicated with the interior. The air mixing cavity is configured to mix the outdoor air guided by the fresh air channel with the indoor air guided by the circulating air channel, and introduce the mixed air into the interior. The first heat exchanger is arranged in the fresh air channel and is configured to adjust the air humidity and temperature in the fresh air channel. The second heat exchanger is arranged in the circulating air channel and is configured to adjust the air humidity and temperature in the circulating air channel. The third heat exchanger is arranged in the air mixing cavity and is configured to adjust the air humidity and temperature in the air mixing cavity.

## Description

This application claims priority to Chinese Patent Application No. 202111634628.3, filed on December 29, 2021, Chinese Patent Application No. 202123357569.8, filed on December 29, 2021, Chinese Patent Application No. 202123353801.0, filed on December 29, 2021, and Chinese Patent Application No. 202123353841.5, filed on December 29, 2021, which are incorporated herein by reference in their entireties.

### TECHNICAL FIELD

The present disclosure relates to the field of air purifying technologies, and in particular, to a fresh air integrated machine.

### BACKGROUND

In the related technology, fresh air machines do not have an internal circulation air processing function of air conditioners. Users need to install the fresh air machines and the air conditioners together, which takes up a large space and the installation remains unchanged.

### SUMMARY

Some embodiments of the present disclosure provide a fresh air integrated machine. The fresh air integrated machine includes a housing, and a fresh air channel, a circulating air channel, an air mixing cavity, a first heat exchanger, a second heat exchanger, and a third heat exchanger disposed in the housing. An inlet end of the fresh air channel is communicated to the outdoors, and an outlet end of the fresh air channel is communicated to a first end of the air mixing cavity. The fresh air channel is configured to introduce outdoor air into the air mixing cavity. An inlet end of the circulating air channel is communicated to indoors, an outlet end of the circulating air channel is communicated to a second end of the air mixing cavity. The circulating air channel is configured to introduce indoor air into the air mixing cavity. A third end of the air mixing cavity is communicated to the indoors. The air mixing cavity is configured to mix and introduce the outdoor air introduced by the fresh air channel and the indoor air introduced by the circulating air channel into indoors. The first heat exchanger is disposed in the fresh air channel and configured to adjust humidity and temperature of air in the fresh air channel. The second heat exchanger is disposed in the circulating air channel, and configured to adjust humidity and temperature of air in the circulating air channel. The third heat exchanger is disposed in the air mixing cavity, and configured to adjust humidity and temperature of air in the air mixing cavity.

### BRIEF DESCRIPTION OF THE DRAWINGS

FIG. 1 is a structural diagram of a fresh air integrated machine, in accordance with some embodiments;
FIG. 2 is a diagram showing a structure of another fresh air integrated machine, in accordance with some embodiments;
FIG. 3 is a diagram showing a structure of another fresh air integrated machine, in accordance with some embodiments;
FIG. 4A is a diagram showing a structure of yet another fresh air integrated machine, in accordance with some embodiments;
FIG. 4B is a diagram showing a structure of yet another fresh air integrated machine, in accordance with some embodiments;
FIGS. 5 to 7 are diagrams showing flow paths of gas when a fresh air integrated machine operates in different modes, in accordance with some embodiments;
FIGS. 8 to 12B are schematic diagrams showing flow paths of gas when another fresh air integrated machine operates in different modes, in accordance with some embodiments;
FIGS. 13 to 17 are schematic diagrams showing flow paths of gas when a fresh air integrated machine operates in different modes, in accordance with some embodiments;
FIG. 18 is a flow chart of an operational principle of a fresh air integrated machine, in accordance with some embodiments;
FIG. 19 is a flow chart of an operational principle of a fresh air integrated machine, in accordance with some embodiments;
FIG. 20 is another flow chart of an operational principle of a fresh air integrated machine, in accordance with some embodiments;
FIG. 21 is yet another flow chart of an operational principle of a fresh air integrated machine, in accordance with some embodiments;
FIG. 22 is yet another flow chart of an operational principle of a fresh air integrated machine, in accordance with some embodiments;
FIG. 23 is yet another flow chart of an operational principle of a fresh air integrated machine, in accordance with some embodiments;
FIG. 24 is yet another flow chart of an operational principle of a fresh air integrated machine, in accordance with some embodiments;
FIG. 25 is a structural diagram of a fresh air integrated machine installed on a suspended ceiling, in accordance with some embodiments;
FIG. 26 is another structural diagram of the fresh air integrated machine installed on a suspended ceiling shown in FIG. 25, in accordance with some embodiments;
FIG. 27 is yet another structural diagram of the fresh air integrated machine installed on a suspended ceiling shown in FIG. 25, in accordance with some embodiments;
FIG. 28 is a diagram showing a structure of another fresh air integrated machine, in accordance with some embodiments; and
FIG. 29 is a diagram showing a structure of another fresh air integrated machine, in accordance with some embodiments.

### DETAILED DESCRIPTION

The technical solutions in some embodiments of the present disclosure will be described clearly and completely with reference to the accompanying drawings; obviously, the described embodiments are merely some but not all of embodiments of the present disclosure. All other embodiments obtained by a person of ordinary skill in the art based on embodiments of the present disclosure shall be included in the protection scope of the present disclosure.

In the related art, fresh air integrated machines generally mix indoor air and outdoor air (which may also be referred to as outdoor fresh air) directly indoors, and the mixed air flows through a heat exchanger to implement cooling or heating. It is difficult for a single heat exchanger to satisfy the random switching and free combination of an indoor air circulation mode and an outdoor fresh air introduction mode, and the indoor temperature may fluctuate greatly. In addition, for extreme conditions such as a high indoor humidity and a high outdoor humidity, a single heat exchanger may not satisfy the dehumidification requirements. In addition, in a case where the indoor air and the outdoor fresh air are directly mixed, condensation is prone to occur, which affects the reliability of the fresh air integrated machine.

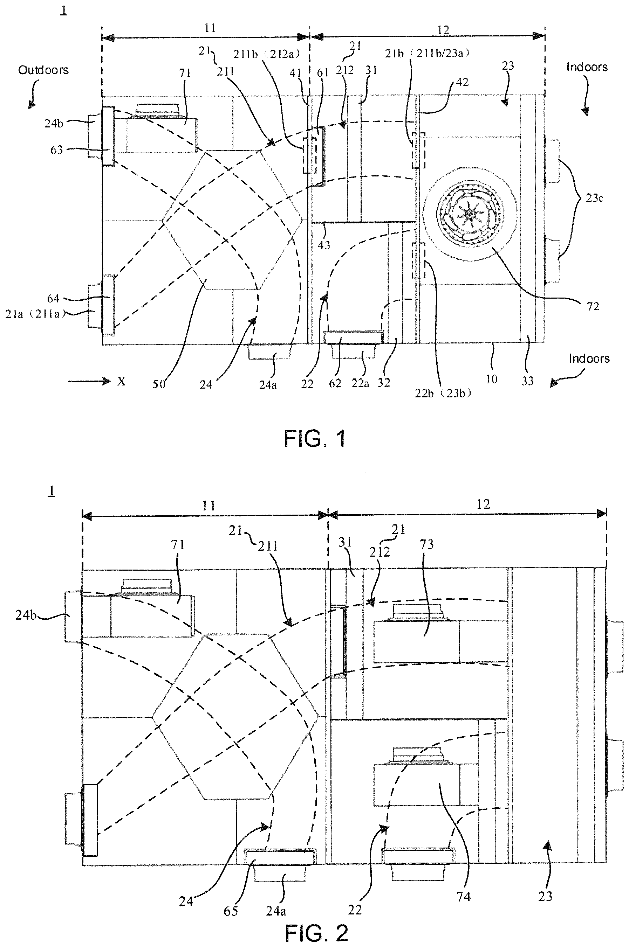

In order to solve the above problems, in some embodiments of the present disclosure, a fresh air integrated machine is provided. Referring to FIG. 1, the fresh air integrated machine 1 includes a housing 10, and a fresh air channel 21, a circulating air channel 22 and an air mixing cavity 23 arranged in the housing 10 and formed by baffles.

An inlet end 21a of the fresh air channel 21 is communicated to the outdoors, and an outlet end 21b of the fresh air channel 21 is communicated to a first end 23a of the air mixing cavity 23. Outdoor air may flow into the air mixing cavity 23 through the fresh air channel 21. Hereinafter, for convenience of explanation, the air that enters the fresh air integrated machine from the inlet end 21a of the fresh air channel and may flow into indoors through the fresh air channel 21 and the air mixing cavity 23 is referred to as fresh air.

It will be noted that the gas channels (e.g., the fresh air channel, the circulating air channel, an exhaust channel) may be formed by the housing 10 and structures (such as baffles) inside the housing 10. The present disclosure does not limit the specific shape of the gas channels, as long as the gas can flow through the channels. The gas channels shown in some drawings of the present disclosure are schematic only, this cannot be understood as a limitation of the shape of the channels.

An inlet end 22a of the circulating air channel 22 is communicated to the indoors, and an outlet end 22b of the circulating air channel 22 is communicated to a second end 23b of the air mixing cavity 23. The indoor air may flow into the air mixing cavity 23 through the circulating air channel 22.

A third end 23c of the air mixing cavity 23 is communicated to the indoors. The outdoor fresh air flows into the air mixing cavity 23 through the fresh air channel 21, and flows into indoors through the air mixing cavity 23. The indoor air flows into the air mixing cavity 23 through the circulating air channel 22, and then flows into indoors through the air mixing cavity 23. In this way, the outdoor fresh air and the indoor air may be mixed in the air mixing cavity 23 and then flow into indoors. Hereinafter, for convenience of explanation, the air that enters the fresh air integrated machine from the inlet end 22a of the circulating air channel, and may flow into indoors again through the circulating air channel 22 and the air mixing cavity 23 to circulate indoors is referred to as circulating air.

As shown in FIG. 1, the fresh air integrated machine 1 further includes a first heat exchanger 31, a second heat exchanger 32 and a third heat exchanger 33. The first heat exchanger 31 is disposed in the fresh air channel 21. The first heat exchanger 31 is configured to adjust the humidity and temperature of the fresh air. The second heat exchanger 32 is disposed in the circulating air channel 22. The second heat exchanger 32 is configured to adjust the humidity and temperature of the circulating air. The third heat exchanger 33 is disposed in the air mixing cavity 23. The third heat exchanger 33 is configured to adjust the humidity and temperature of the air in the air mixing cavity 23. The first heat exchanger 31, the second heat exchanger 32 and the third heat exchanger 33 are turned on on demand to implement multi-stage dehumidification. Moreover, both the circulating air channel 22 and the fresh air channel 21 are provided with a heat exchanger therein, which may independently control the temperature of the circulating air in the circulating air channel 22 and the temperature of the fresh air in the fresh air channel 21. In this way, the problem of significant fluctuations in the indoor temperature may be avoided.

In some embodiments, the fresh air integrated machine 1 further includes an exhaust channel 24. The exhaust channel 24 is disposed in the housing 10. An inlet end 24a of the exhaust channel 24 is communicated to the indoors, and an outlet end 24b of the exhaust channel 24 is communicated to the outdoors. The exhaust air (also referred to as indoor dirty air) is discharged to the outdoors through the exhaust channel 24.

In some embodiments, the fresh air integrated machine 1 further includes a heat exchange member 50. Both the fresh air channel 21 and the exhaust channel 24 run through the heat exchange member 50. In this way, the fresh air and the exhaust air may exchange heat at the heat exchange member 50, which is conducive to reducing energy consumption.

In some embodiments, the heat exchange member 50 is a total heat exchange core. The total heat exchange core includes a first heat exchange channel and a second heat exchange channel that are independent of each other. The first heat exchange channel is connected in series with the fresh air channel 21, so that the outdoor fresh air will flow through the first heat exchange channel when flowing into indoors through the fresh air channel 21. The second heat exchange channel is connected in series with the exhaust channel 24, so that the indoor exhaust air will flow through the second heat exchange channel when flowing to the outdoors through the exhaust channel 24.

The air in the first heat exchange channel and the air in the second heat exchange channel are capable of exchanging heat with each other. Therefore, the fresh air flowing through the first heat exchange channel and the exhaust air flowing through the second heat exchange channel exchange heat with each other in the heat exchange member 50. The heat in the exhaust air discharged to the outside may be utilized through heat exchange, so that the temperature of the fresh air in the fresh air channel 21 may be close to the temperature of the exhaust air after flowing through the first heat exchange channel, that is, close to the indoor temperature.

In some embodiments, the housing 10 has a first cavity 11 and a second cavity 12. For example, an inner cavity of the housing 10 is divided into the first cavity 11 and the second cavity 12 arranged along a direction X through a first baffle 41. The direction X is, for example, parallel to a direction from the outdoors to the indoors.

The fresh air channel 21 includes a first fresh air channel section 211 and a second fresh air channel section 212. The first fresh air channel section 211 is communicated to the second fresh air channel section 212. An inlet end 211a of the first fresh air channel section 211 is the inlet end 21a of the fresh air channel 21. An outlet end 211b of the first fresh air channel section 211 is communicated to an inlet end 212a of the second fresh air channel section 212, and an outlet end 212b of the second fresh air channel section 212 is the outlet end 21b of the fresh air channel 21. In this way, the outdoor fresh air may flow into the indoors through the first fresh air channel section 211 and the second fresh air channel section 212 in sequence.

The first fresh air channel section 211, the exhaust channel 24 and the heat exchange member 50 are disposed in the first cavity 11. Moreover, both the first fresh air channel section 211 and the exhaust channel 24 run through the heat exchange member 50. In this way, the fresh air in the first fresh air channel section 211 and the exhaust air in the exhaust channel 24 may exchange heat with each other in the heat exchange member 50.

The second fresh air channel section 212, the circulating air channel 22 and the air mixing cavity 23 are disposed in the second cavity 12. For example, the second fresh air channel section 212 and the air mixing cavity 23 are separated by a second baffle 42. The circulating air channel 22 and the air mixing cavity 23 are also separated by the second baffle 42. The second fresh air channel section 212 and the circulating air channel 22 are separated by a third baffle 43.

In some embodiments, the inlet end 21a of the fresh air channel 21 is disposed on the housing surrounding the first cavity 11. The outlet end 211b of the first fresh air channel section 211 and the inlet end 212a of the second fresh air channel section 212 are disposed on the first baffle 41, which is conducive to communicating the first fresh air channel section 211 and the second fresh air channel section 212.

The inlet end 22a of the circulating air channel 22 is disposed on the housing surrounding the second cavity 12. The third end 23c of the air mixing cavity 23 is a mixed air outlet end, and the mixed air outlet end 23c is disposed on the housing surrounding the second cavity 12. For example, the air mixing cavity 23 may have a plurality of air mixing outlet ends 23c, which may improve the air outlet effect.

The inlet end 24a of the exhaust channel 24 is disposed on the housing surrounding the first cavity 11. The outlet end 24b of the exhaust channel 24 is further disposed on the housing surrounding the first cavity 11. The exhaust air enters the exhaust channel 24 through the exhaust air inlet end 24a, and then is discharged to the outdoors through the exhaust air outlet end 24b.

In some embodiments, the fresh air integrated machine 1 further includes a plurality of air valve. A gas channel (e.g., a fresh air channel, a circulating air channel or an exhaust channel) is provided with at least one air valve therein. For example, an inlet end and/or an outlet end of a gas channel is provided with the air valve. The opening and closing of the gas channel may be controlled through the air valve in the gas channel.

For example, the inlet end 22a of the circulating air channel 22 is provided with a second air valve 62. The outlet end 24b of the exhaust channel 24 is provided with a third air valve 63. The inlet end 21a of the fresh air channel 21 is provided with a fourth air valve 64. Each gas channel may be controlled independently through the above plurality of air valves.

In some embodiments, the fresh air inlet end 21a is provided with a fourth air valve 64; the connection between the first fresh air channel section 211 and the second fresh air channel section 212 is provided with a first air valve 61. Through the fourth air valve 64 and the first air valve 61, the opening and closing of the fresh air channel 21 may be controlled, and the first fresh air channel section 211 and the second fresh air channel section 212 may further be controlled independently.

In some embodiments, both the inlet end 21a of the fresh air channel 21 and the inlet end 22a of the circulating air channel 22 are provided with filtering members. The filtering member may filter fresh air and circulating air, and may improve air cleanliness.

In some embodiments, the fresh air integrated machine 1 includes a first fan 71 disposed in the exhaust channel 24 and a second fan 72 disposed in the air mixing cavity 23. The exhaust air flows towards the outdoors through the exhaust channel 24 due to the action of the first fan 71. The fresh air and circulating air flow towards the indoors due to the action of the second fan 72. The outdoor fresh air and circulating air may share the second fan 72, which may save costs and reduce energy consumption.

FIG. 2 is a diagram showing a structure of another fresh air integrated machine, in accordance with some embodiments. Referring to FIG. 2, in some other embodiments, the fresh air integrated machine 1 includes a first fan 71 disposed in the exhaust channel 24, a third fan 73 disposed in the second fresh air channel section 212, and a fourth fan 74 disposed in the circulating air channel 22. The exhaust air flows towards the outdoors due to the action of the first fan 71. The outdoor fresh air flows towards the indoors due to the action of the third fan 73. The circulating air flows towards the indoors due to the action of the fourth fan 74. The outdoor fresh air and the indoor circulating air are respectively controlled by the third fan 73 and the fourth fan 74 independent of each other. The fresh air and the circulating air are mixed in the air mixing cavity 23, and there is no fan in the air mixing cavity 23. In this way, the problem of condensation in the air mixing cavity 23 and the risk of electricity consumption caused by condensation may be avoided.

In addition, since the first fresh air channel section 211 and the heat exchange member 50 are both disposed in the first cavity 11, compared with disposing the third fan 73 in the first fresh air channel section 211, the space of the second cavity 12 may be utilized more rationally in a case where the third fan 73 is disposed in the second fresh air channel section 212.

In some embodiments, the fresh air integrated machine 1 further includes a fifth air valve 65 disposed at the inlet end 24a of the exhaust channel 24. In this case, the outlet end 24b of the exhaust channel 24 may not be provided with the air valve, which may provide space for the installation of the first fan 71.

In some embodiments, referring to FIGS. 1 and 2, the first heat exchanger 31 is disposed in the second fresh air channel section 212. In a case where the outdoor fresh air flows through the first fresh air channel section 211, the outdoor fresh air may exchange heat with the exhaust air at the heat exchange member 50. After heat exchange, the fresh air flows into the second fresh air channel section 212 and flows through the first heat exchanger 31. In this way, the first heat exchanger 31 and the heat exchange member 50 may jointly bear the cooling or heating load of the fresh air, which is conducive to saving energy consumption.

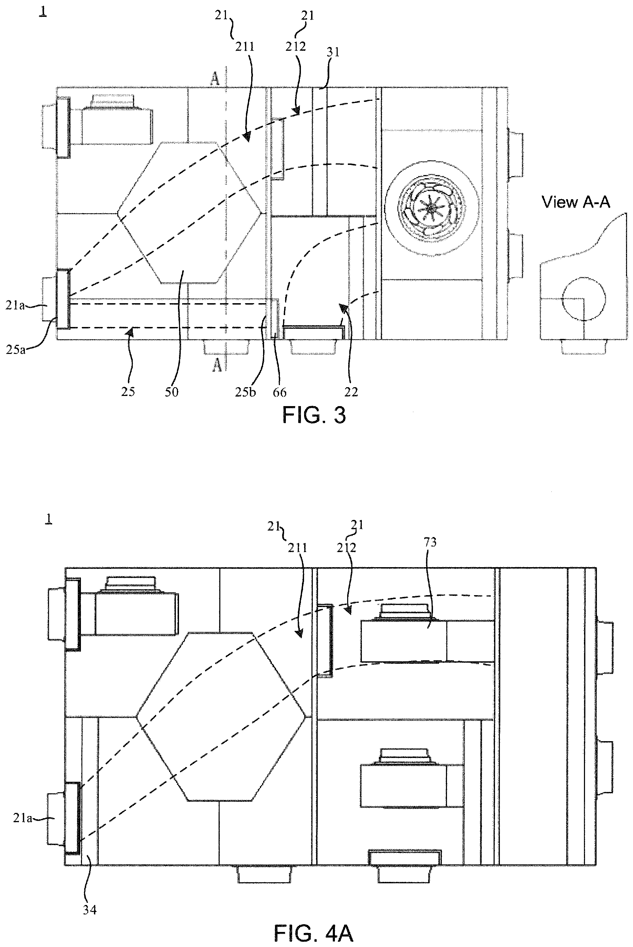

FIG. 3 is a diagram showing a structure of another fresh air integrated machine, in accordance with some embodiments. Referring to FIG. 3, in some embodiments, a bypass channel 25 is further formed inside the housing 10. That is, the fresh air integrated machine 1 further includes a bypass channel 25. An inlet end 25a of the bypass channel 25 is communicated with the inlet end of the first fresh air channel section 211. That is, the inlet end 25a of the bypass channel 25 is communicated with the fresh air inlet end 25a. An outlet end 25b of the bypass channel 25 is communicated to the circulating air channel 22.

In a case where the fresh air integrated machine 1 includes the bypass channel 25, and the fresh air integrated machine 1 introduces the fresh air, there are two ways for the fresh air to flow into indoors.

One way is that the fresh air flows into indoors through the fresh air channel 21. In this case, the bypass channel 25 is closed. The fresh air and the exhaust air will exchange heat at the heat exchange member 50, which is conducive to reducing energy consumption.

Another way is that the fresh air enters the circulating air channel 22 through the bypass channel 25 and then flows into indoors. In this case, the fresh air channel 21 is closed. In this way, the fresh air does not flow through the heat exchange member 50 and does not exchange heat with the indoor exhaust air flowing through the exhaust channel and the heat exchange member.

The bypass channel 25 may be opened in a case where the outdoor temperature is equivalent to the indoor temperature (e.g., transition seasons such as spring and autumn). In this case, the fresh air may satisfy the user's demand without cooling or heating. Based on this, the fresh air may flow into indoors directly through the bypass channel 25 without exchanging heat with the indoor exhaust air at the heat exchange member 50. In this way, the service life of the heat exchange member may be extended and energy may be saved.

In addition, compared with a case that the bypass channel 25 is not communicated to the inlet end 21a of the fresh air channel 21 and has a separate inlet end, the structure of the fresh air integrated machine 1 may be more compact in a case where the inlet end 25a of the bypass channel 25 is communicated to the inlet end 21a of the fresh air channel 21, which is conducive to implementing miniaturization of the fresh air integrated machine 1.

In some embodiments, the outlet end 25b of the bypass channel 25 is provided with a bypass air valve 66. The bypass air valve 66 is configured to control the opening and closing of the bypass channel 25. In a case where the fresh air does not need to flow through the bypass channel 25, the bypass air valve 66 is turned off, thereby closing the bypass channel 25.

FIG. 4A is a diagram showing a structure of yet another fresh air integrated machine, in accordance with some embodiments. Referring to FIG. 4A, in some embodiments, the fresh air integrated machine 1 further includes a heating component 34 disposed at the inlet end 21a of the fresh air channel, which may preheat the fresh air. In this case, the first heat exchanger (e.g., the first heat exchanger 31 shown in FIGS. 1 to 3) may not be disposed in the second fresh air channel section 212.

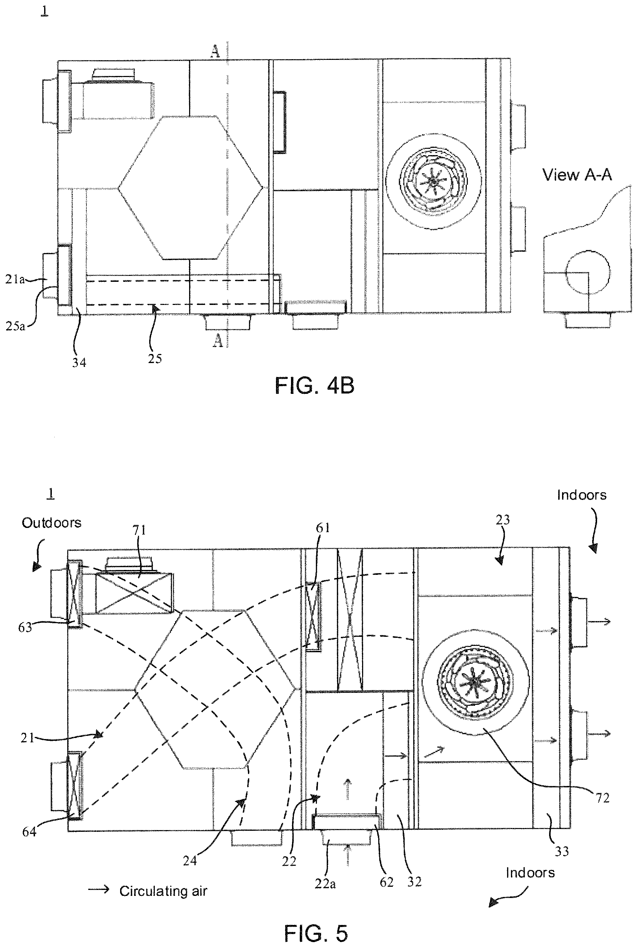

FIG. 4B is a diagram showing a structure of yet another fresh air integrated machine, in accordance with some embodiments. Referring to FIG. 4B, in some embodiments, since the heating component 34 is disposed at the inlet end 21a of the fresh air channel, and the inlet end 25a of the bypass channel 25 is communicated with the inlet end 21a of the fresh air channel, the heating component 34 is disposed at the inlet end 25a of the bypass channel 25. The heating component 34 may preheat the fresh air entering the bypass channel 25.

Based on the structure of the fresh air integrated machine 1 described above, the flow path of the gas and the working status of each component in a case where the fresh air integrated machine 1 operates in different modes will be described below.

FIGS. 5 to 7 are diagrams showing flow paths of gas when a fresh air integrated machine operates in different modes, in accordance with some embodiments. Referring to FIGS. 5 to 7, in some embodiments, in a case where the fresh air integrated machine 1 does not include the bypass channel, the fresh air integrated machine 1 has a fresh air mode, a circulating air mode, and a fresh air and circulating air mode.

In some embodiments, referring to FIG. 5, in the circulating air mode, the indoor air (i.e., the circulating air) flows into indoors through the circulating air channel 22 and the air mixing cavity 23. For example, in the circulating air mode, the second air valve 62 is turned on and the circulating air channel 22 is opened. The second fan 72 is turned on, and the circulating air flows into indoors through the circulating air channel 22 and the air mixing cavity 23 due to the action of the second fan 72. In addition, the first air valve 61 and the fourth air valve 64 are turned off, so that the fresh air channel 21 is closed. In addition, the third air valve 63 is turned off, so that the exhaust channel 24 is closed. In this case, the first fan 71 is turned off, which may save energy.

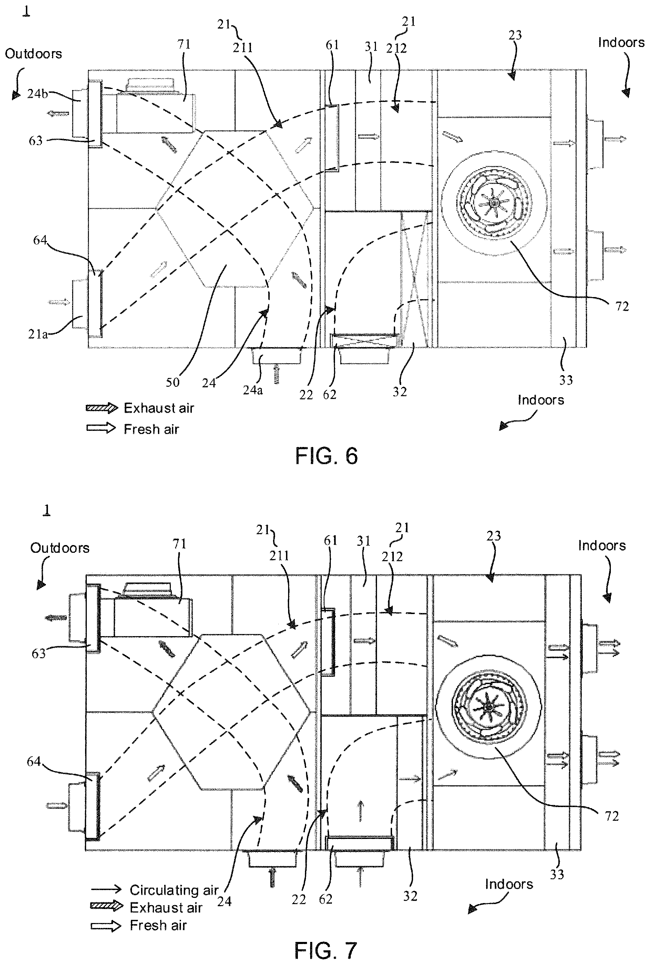

In some embodiments, referring to FIG. 6, in the fresh air mode, the outdoor air (i.e., the outdoor fresh air) flows into indoors through the fresh air channel 21 and the air mixing cavity 23. In addition, the exhaust air flows to outdoors through the exhaust channel 24. For example, in the fresh air mode, the first air valve 61 and the fourth air valve 64 are turned on, so that the fresh air channel 21 is opened. The second fan 72 is turned on, and the outdoor fresh air flows into indoors through the first fresh air channel section 211, the heat exchange member 50, the second fresh air channel section 212 and the air mixing cavity 23 due to the action of the second fan 72. In addition, the third air valve 63 is turned on, so that the exhaust channel 24 is opened. The first fan 71 is turned on, and the exhaust air is discharged to outdoors through the exhaust channel 24 and the heat exchange member 50 due to the action of the first fan 71. During this process, the fresh air and the exhaust air may exchange heat at the heat exchange member 50, which can reduce energy consumption.

In some embodiments, referring to FIG. 7, in the fresh air and circulating air mode, the indoor air flows into indoors through the circulating air channel 22 and the air mixing cavity 23, and the outdoor air flows into indoors through the fresh air channel 21 and the air mixing cavity 23. In addition, the exhaust air flows to the outdoors through the exhaust channel 24. For example, the first air valve 61 and the fourth air valve 64 are turned on, so that the fresh air channel 21 is opened. Furthermore, the second air valve 62 is turned on, so that the circulating air channel 22 is opened. Moreover, the second fan 72 is turned on, and the fresh air and the circulating air enter the fresh air channel and the circulating air channel respectively due to the action of the second fan 72. In addition, the third air valve 63 is turned on, so that the exhaust channel 24 is opened. The first fan 71 is turned on, and the exhaust air is discharged to the outdoors through the exhaust channel due to the action of the first fan 71.

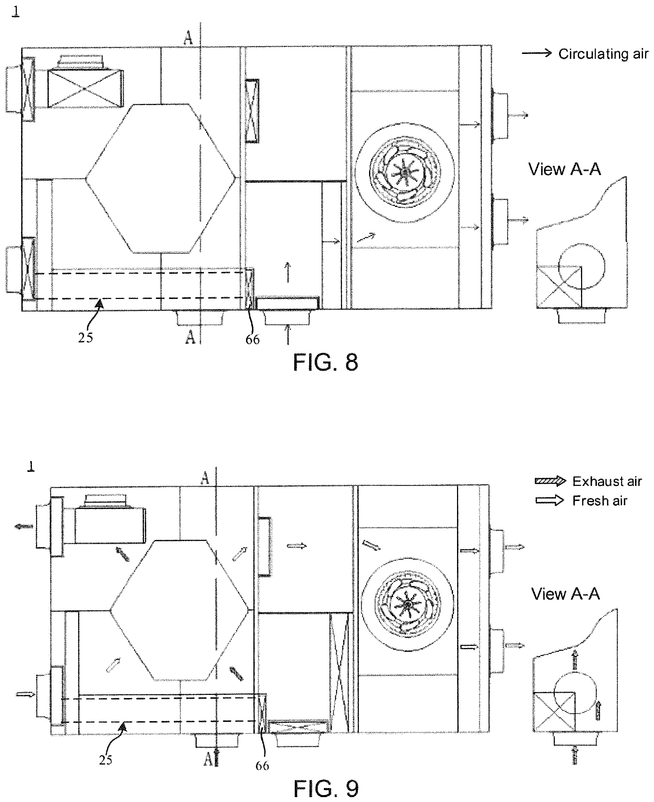

FIGS. 8 to 12B are schematic diagrams showing flow paths of gas when another fresh air integrated machine operates in different modes, in accordance with some embodiments. Referring to FIGS. 8 to 12B, in some embodiments, in a case where the fresh air integrated machine 1 includes the bypass channel 25, the fresh air integrated machine 1 has the fresh air mode, the circulating air mode, the fresh air and circulating air mode, a bypass fresh air mode, and a bypass fresh air and circulating air mode.

Referring to FIGS. 8 to 10, in a case where the fresh air integrated machine 1 includes the bypass channel 25, the gas flow path and the working status of each component when the fresh air integrated machine 1 operates in the fresh air mode, the circulating air mode, and the fresh air and circulating air mode may be the same as the gas flow path and the working status of each component when the fresh air integrated machine 1 operates in the corresponding modes and does not include the bypass channel 25, reference may be made to the above description, and details will not be repeated here. It will be noted that in the above modes, the bypass channel 25 is closed. For example, the bypass air valve 66 is turned off to close the bypass channel 25.

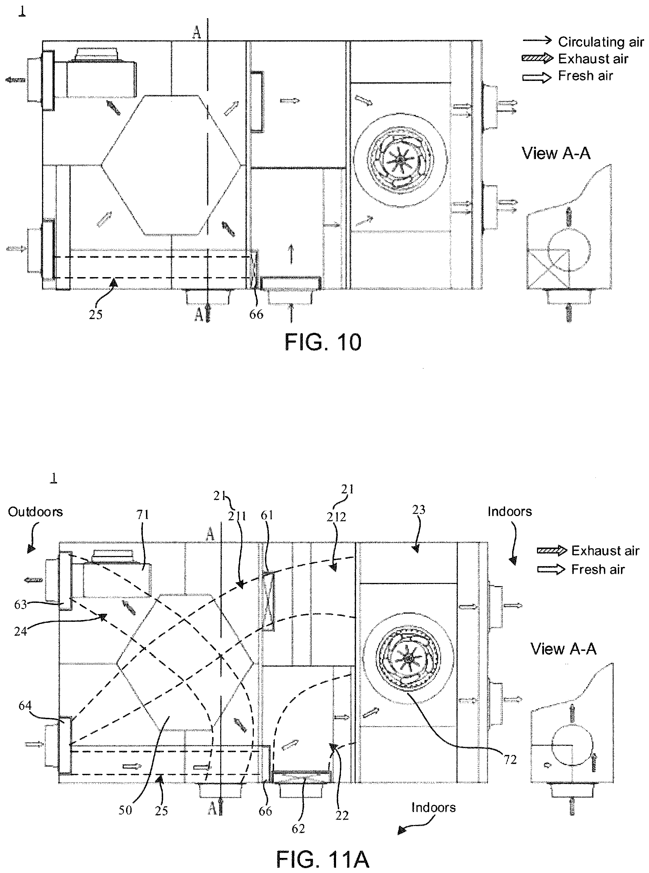

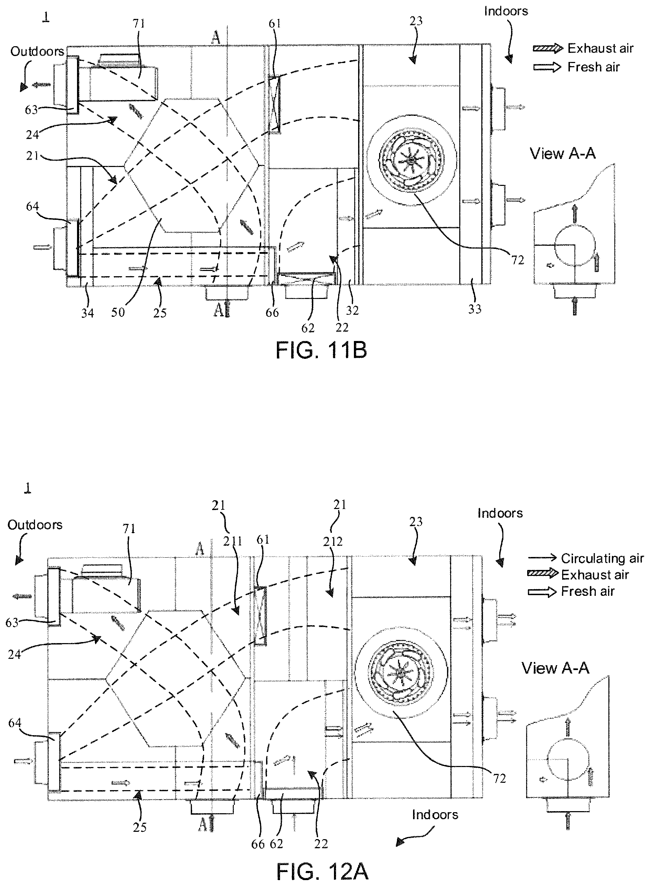

In some embodiments, referring to FIGS. 11A and 11B, in the bypass fresh air mode, the outdoor air flows into indoors through the bypass channel 25, the circulating air channel 22 and the air mixing cavity 23. For example, the fourth air valve 64 is turned on, the bypass air valve 66 is turned on, and the bypass channel 25 is opened. Furthermore, the first air valve 61 is turned off, so that the fresh air channel 21 is closed. The second air valve 62 is turned off, so that the circulating air channel 22 is closed. In this case, the second fan 72 is turned on, and the outdoor fresh air flows into indoors through the bypass channel 25, the circulating air channel 22 and the air mixing cavity 23 due to the action of the second fan 72. Furthermore, the third air valve 63 and the first fan 71 are turned on, and the exhaust air is discharged outdoors through the exhaust channel 24 and the heat exchange member 50.

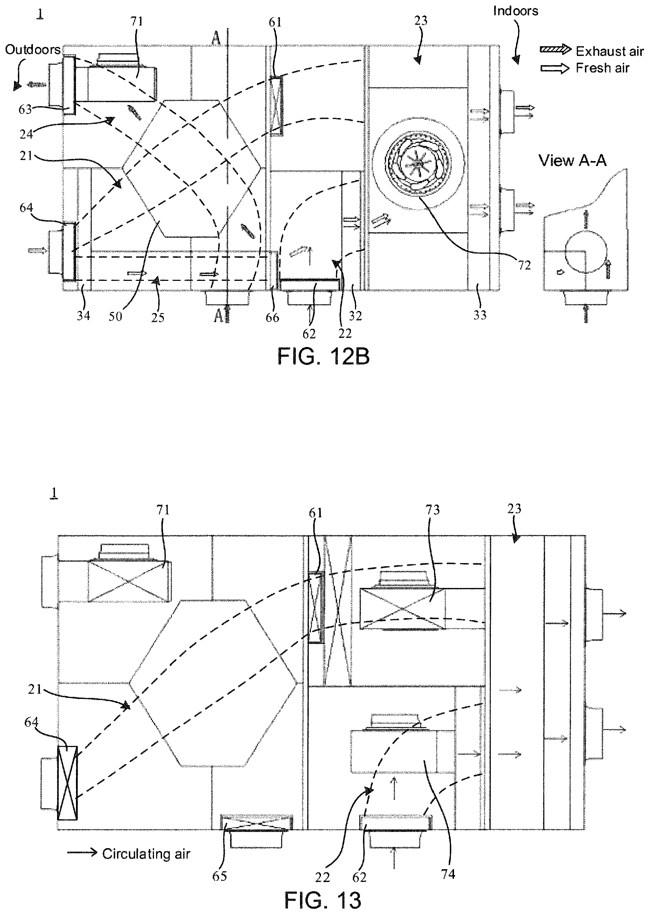

In some embodiments, referring to FIGS. 12A and 12B, in the bypass fresh air and circulating air mode, the outdoor air flows into indoors through the bypass channel 25, the circulating air channel 22 and the air mixing cavity 23, and the indoor air flows into indoors through the circulating air channel 22 and the air mixing cavity 23. In addition, the exhaust air flows to the outdoors through the exhaust channel 24. For example, the fourth air valve 64 and the bypass air valve 66 are turned on, so that the bypass channel 25 is opened. Furthermore, the first air valve 61 is turned off, so that the fresh air channel 21 is closed. The second air valve 62 is turned on, so that the circulating air channel 22 is opened. In this case, the second fan 72 is turned on, and the circulating air and the fresh air enter the circulating air channel 22 and the bypass channel 25 respectively due to the action of the second fan 72. In addition, the third air valve 63 is turned on, so that the exhaust channel 24 is opened. In addition, the first fan 71 is turned on, and the exhaust air is discharged outdoors due to the action of the first fan 71.

It will be noted that the above description is illustrated by taking an example in which the fresh air integrated machine includes the first fan 71 and the second fan 72. The second fan 72 is used to control the opening or closing of the fresh air channel 21, the bypass channel 25 and the circulating air channel 22.

FIGS. 13 to 17 are schematic diagrams showing flow paths of gas when a fresh air integrated machine operates in different modes, in accordance with some embodiments. Referring to FIGS. 13 to 17, in a case where the fresh air integrated machine 1 includes the first fan 71, the third fan 73 and the fourth fan 74, the opening and closing of the fresh air channel 21 may be controlled by the third fan 73, and the opening and closing of the fresh air channel 21 may be controlled by the third fan 73, and the opening and closing of the circulating air channel 22 and the bypass channel 25 may be controlled by the fourth fan 74.

In some embodiments, referring to FIG. 13, in the circulating air mode, the second air valve 62 and the fourth fan 74 are turned on, and the circulating air flows into indoors through the circulating air channel 22 and the air mixing cavity 23 due to the action of the fourth fan 74. And, the third fan 73 is turned off. In addition, the fourth air valve 64 and the first air valve 61 are turned off, so that the fresh air channel 21 is closed.

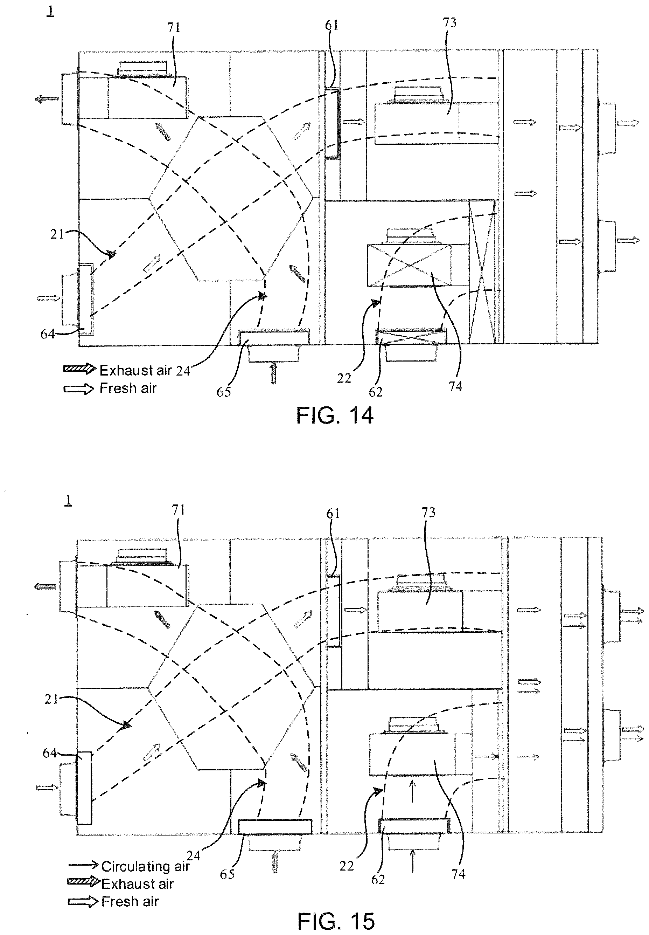

In some embodiments, referring to FIG. 14, in the fresh air mode, the first air valve 61 and the fourth air valve 64 are turned on, the third fan 73 is opened, and the fresh air flows into indoors through the fresh air channel 21 due to the action of the third fan 73. Furthermore, the second air valve 62 is turned off, so that the circulating air channel 22 is closed. And, the fourth fan 74 is turned off.

In some embodiments, referring to FIG. 15, in the fresh air and circulating air mode, the fourth air valve 64 and the first air valve 61 are turned on, the third fan 73 is opened, and the outdoor fresh air flows towards the indoors through the fresh air channel 21 due to the action of the third fan 73. Furthermore, the second air valve 62 and the fourth fan 74 are turned on, and the circulating air flows into indoors through the circulating air channel 22 due to the action of the fourth fan 74.

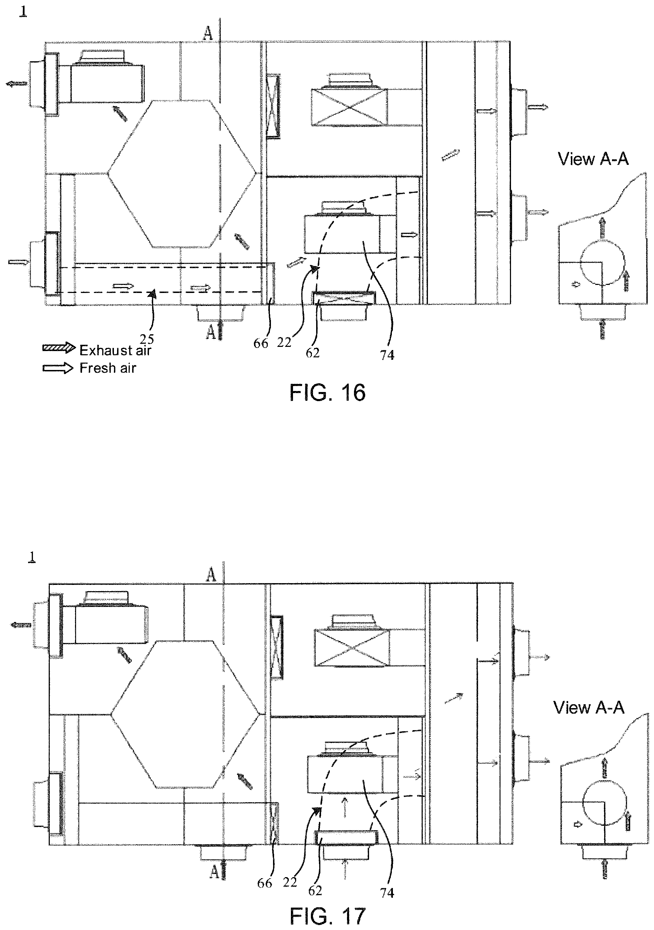

In some embodiments, referring to FIGS. 16 and 17, in a case where the fresh air integrated machine 1 includes the bypass channel 25, the circulating air channel 22 and the bypass channel 25 share the fourth fan 74. In a case where the fourth fan 74 is turned on, one of the circulating air channel 22 and the bypass channel 25 may be opened and another may be closed through the bypass air valve 66 and the second air valve 62. For example, referring to FIG. 16, the fourth fan 74 is turned on, the second air valve 62 is turned off, and the bypass air valve 66 is opened. In this way, the bypass channel 25 is opened and the circulating air channel 22 is closed. For another example, referring to FIG. 17, the fourth fan 74 is turned on, the bypass air valve 66 is turned off, and the second air valve 62 is turned on. In this way, the circulating air channel 22 is opened and the circulating air channel 22 is closed.

The operating conditions of each heat exchanger when the fresh air integrated machine 1 operates in each working mode will be described below with reference to the structure of the fresh air integrated machine 1 described above and the gas flow path when the fresh air integrated machine 1 operates in each mode.

In some embodiments, referring to FIG. 5, in the circulating air mode, the second heat exchanger 32 is configured to be turned on on demand according to the humidity of the circulating air in the circulating air channel 22, so as to adjust the humidity of the circulating air. For example, in a case where the humidity of the air in the circulating air channel 22 does not satisfy the user's demand, the second heat exchanger 32 is turned on, which may reduce the moisture content of the circulating air. In a case where the air humidity in the circulating air channel 22 satisfies the user's demand, the second heat exchanger 32 is turned off.

The third heat exchanger 33 is configured to be turned on on demand according to the temperature of the circulating air, so as to adjust the temperature of the gas flowing into indoors. For example, in a case where the temperature of the circulating air flowing through the second heat exchanger 32 does not satisfy the user's demand, the third heat exchanger 33 is used as an evaporator or a condenser, so as to adjust the temperature of the gas flowing into indoors to reach the temperature specified by the user.

In addition, in some embodiments, in a case where the humidity of the circulating air dehumidified by the second heat exchanger 32 still does not satisfy the user's demand, the third heat exchanger 33 is turned on to continue to bear the dehumidification load, so as to control the humidity of the air flowing into indoors to reach the specified humidity. In a case where the humidity and temperature of the circulating air after flowing through the second heat exchanger 32 satisfy the user's demand, the third heat exchanger 33 is turned off.

In addition, in the circulating air mode, the first heat exchanger 31 may be turned off to save energy consumption.

In some embodiments, referring to FIG. 6, in the fresh air mode, the first heat exchanger 31 is configured to be turned on on demand according to the humidity of the fresh air in the fresh air channel 21, so as to adjust the humidity of the fresh air. For example, in a case where the humidity of the fresh air after flowing through the heat exchange member 50 does not satisfy the user's demand, the first heat exchanger 31 is turned on, which may reduce the moisture content of the fresh air. In a case where the humidity of the fresh air after flowing through the heat exchange member 50 satisfies the user's demand, the first heat exchanger 31 is turned off.

The third heat exchanger 33 is configured to be turned on on demand according to the temperature of the fresh air, so as to adjust the temperature of the gas flowing into indoors. For example, in a case where the temperature of the fresh air after flowing through the first heat exchanger 31 does not satisfy the user's demand, the third heat exchanger 33 is used as an evaporator or a condenser, so as to control the temperature of the fresh air flowing into indoors to reach the temperature specified by the user.

In addition, in some embodiments, in a case where the humidity of the fresh air dehumidified by the first heat exchanger 31 still does not satisfy the user's demand, the third heat exchanger 33 is turned on to continue to bear the dehumidification load, so as to control the humidity of the air flowing into indoors to reach the specified humidity. In a case where the humidity and temperature of the fresh air after flowing through the first heat exchanger 31 satisfy the user's demand, the third heat exchanger 33 is turned off.

In addition, in the fresh air mode, the second heat exchanger 32 may be turned off to save energy consumption.

In some embodiments, referring to FIG. 7, in the fresh air and circulating air mode, the first heat exchanger 31 is configured to be turned on on demand according to the humidity of the fresh air in the fresh air channel 21, so as to adjust the humidity of the fresh air. The second heat exchanger 32 is configured to be turned on on demand according to the humidity of the circulating air in the circulating air channel 22, so as to adjust the humidity of the circulating air. The third heat exchanger 33 is configured to be turned on on demand according to the temperature of the gas in the air mixing cavity 23 (e.g., the gas mixed with the fresh air and the circulating air), so as to adjust the temperature of the air flowing into indoors.

In some embodiments, referring to FIGS. 11B and 12B, in the bypass fresh air mode and the bypass fresh air and circulating air mode, the heating component 34, the second heat exchanger 32 and the third heat exchanger 33 are turned on on demand according to the humidity and temperature of the fresh air and the circulating air, so as to adjust the humidity and temperature of the air flowing into indoors.

It will be noted that, referring to FIGS. 5 to 7, based on the above description, the first heat exchanger 31 mainly bears the dehumidification load of the fresh air. The second heat exchanger 32 mainly bears the dehumidification load of the circulating air. Through the dehumidification function of the first heat exchanger 31 and the second heat exchanger 32, the moisture content of the fresh air and the circulating air mixed in the air mixing cavity 23 may be reduced, so that the problem of condensation after the air is mixed may be solved, thereby improving the reliability of the machine.

The third heat exchanger 33 is mainly responsible for the temperature regulation load of the fresh air, the circulating air and the mixed air of fresh air and circulating air, and may control the temperature of the air flowing into indoors to reach the temperature specified by the user.

In special conditions, the first heat exchanger 31 and the second heat exchanger 32 may also be used for cooling or heating, so as to adjust the temperatures of the fresh air and the circulating air. The third heat exchanger 33 may also be used for dehumidification, and may can further dehumidify based on the dehumidification effect of the first heat exchanger 31 or the second heat exchanger 32, so that a multi-stage dehumidification effect may be implemented.

Hereinafter, the operating principle and various operating status of the fresh air integrated machine will be explained.

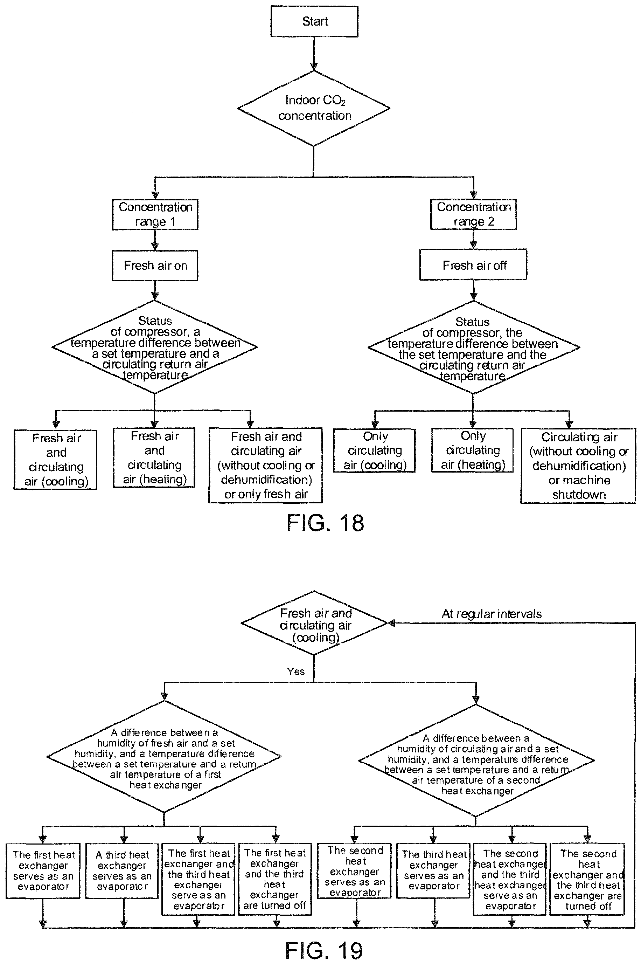

FIG. 18 is a flow chart of an operational principle of a fresh air integrated machine, in accordance with some embodiments. Referring to FIG. 18, the fresh air integrated machine detects indoor CO₂ concentration after being turned on. In a case where the concentration of CO₂ is in a concentration range 1, the outdoor fresh air is introduced into indoors, that is, the fresh air mode is operated. In a case where the concentration of CO₂ is in a concentration range 2, the outdoor fresh air is not introduced, that is, the fresh air mode is not operated. The concentration range 1 and the concentration range 2 may be set according to actual needs, and the present disclosure is not limited thereto.

After determining whether the fresh air integrated machine introduces the fresh air into indoors, it is necessary to comprehensively determine the status of the heat exchangers based on compressor status, a temperature difference between a set temperature and a circulating return air temperature (e.g., the temperature of the circulating air at the inlet end of the circulating air channel). In some embodiments, based on the compressor status, and the temperature difference between the set temperature and the circulating return air temperature, the status of the plurality of heat exchangers of the fresh air integrated machine may be divided into a cooling status, a heating status, and a non-cooling and non-dehumidification status. In the cooling status, the fresh air integrated performs cooling through the plurality of heat exchangers, so that the indoor temperature may be reduced. In the heating status, the fresh air integrated performs heating through the plurality of heat exchangers, so that the indoor temperature may be increased. In the non-cooling and non-dehumidification status, the fresh air integrated machine may not perform cooling and dehumidification through the plurality of heat exchangers, so as to keep the indoor temperature and humidity roughly to remain unchanged.

In a case where the fresh air mode is operated, based on the three statuses of the above-mentioned plurality of heat exchangers, the fresh air integrated machine may have the following four statuses: introducing fresh air and circulating air and cooling, introducing fresh air and circulating air and heating, introducing fresh air and circulating air without cooling and dehumidifying and only introducing fresh air. In a case where the fresh air mode is not operated, based on the above-mentioned three statuses of the plurality of heat exchangers, the fresh air integrated machine may have the following four statuses: only introducing circulating air and cooling, only introducing circulating air and heating, only introducing circulating air without cooling and dehumidifying, and machine shutdown.

After operating for a period of time, the fresh air integrated machine needs to re-determine what status to enter.

FIG. 19 is a flow chart of an operational principle of a fresh air integrated machine in an introducing fresh air and circulating air and cooling status, in accordance with some embodiments. Referring to FIGS. 7 and 19, after determining to enter the introducing fresh air and circulating air and cooling status, the fresh air integrated machine 1 needs to determine the statuses of the first heat exchanger 31, the second heat exchanger 32 and the third heat exchanger 33 respectively.

The statuses of the first heat exchanger 31 and the third heat exchanger 33 are comprehensively determined according to a difference between a fresh air humidity and a set humidity, and a temperature difference between a set temperature and a return air temperature of the first heat exchanger 31 (e.g., the temperature of the fresh air flowing through the first heat exchanger 31), etc. For example, the first heat exchanger 31 and the third heat exchanger 33 may have four statuses such as only the first heat exchanger serving as an evaporator, only the third heat exchanger serving as an evaporator, both the first heat exchanger and the third heat exchanger serving as an evaporator, and both the first heat exchanger and third heat exchanger being turned off.

Similarly, at the circulating air side, according to a difference between a circulating air humidity and the set humidity, and a temperature difference between a set temperature and a return air temperature of the second heat exchanger 32 (e.g., the temperature of the circulating air flowing through the second heat exchanger 32), the second heat exchanger 32 and the third heat exchanger 33 may have four statuses such as only the second heat exchanger serving as an evaporator, only the third heat exchanger serving as an evaporator, both the second heat exchanger and the third heat exchanger serving as an evaporator, and both the second heat exchanger and the third heat exchanger being turned off.

It will be noted that in a case where the fresh air integrated machine is in the introducing fresh air and circulating air and cooling status, since the third heat exchanger 33 is shared by the fresh air and the circulating air, the opening and closing of the third heat exchanger 33 need to be determined uniformly according to the needs of both the fresh air and the circulating air.

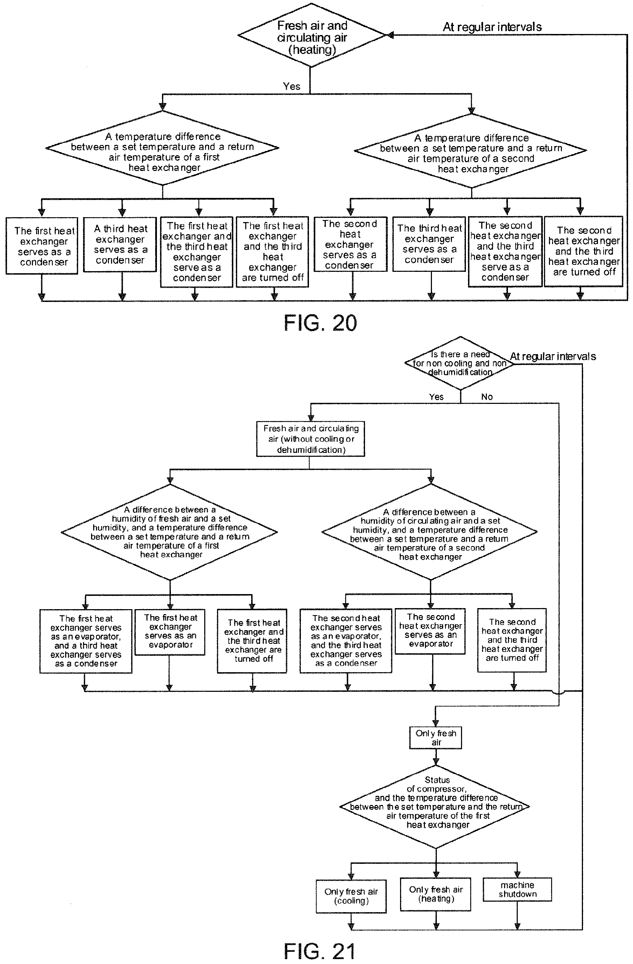

FIG. 20 is a flow chart of the operational principle of a fresh air integrated machine in an introducing fresh air and circulating air and heating status, in accordance with some embodiments. Referring to FIGS. 7 and 20, after determining to enter the introducing fresh air and circulating air and heating status, the fresh air integrated machine 1 needs to determine the statuses of the first heat exchanger 31, the second heat exchanger 32 and the third heat exchanger 33 respectively.

According to the temperature difference between the set temperature and the return air temperature of the first heat exchanger 31, the first heat exchanger 31 and the third heat exchanger 33 may have four statuses such as only the first heat exchanger serving as a condenser, only the third heat exchanger serving as a condenser, both the first heat exchanger and the third heat exchanger serving as a condenser, and both the first heat exchanger and the third heat exchanger being turned off.

Similarly, at the circulating air side, according to the temperature difference between the set temperature and the return air temperature of the second heat exchanger 32, the second heat exchanger 32 and the third heat exchanger 33 may have four statuses such as: only the second heat exchanger serving as a condenser, only the third heat exchanger serving as a condenser, both the second heat exchanger and the third heat exchanger serving as a condenser, and both the second heat exchanger and the third heat exchanger being turned off.

It will be noted that in a case where the fresh air integrated machine is in the introducing fresh air and circulating air and heating status, since the third heat exchanger 33 is shared by the fresh air and the circulating air, the opening and closing of the third heat exchanger 33 need to be determined uniformly according to the needs of both the fresh air and the circulating air.

FIG. 21 is a flow chart of an operational principle of a fresh air integrated machine in an introducing fresh air and circulating air without cooling and dehumidifying status or in an only introducing fresh air, in accordance with some embodiments. Referring to FIGS. 6, 7 and 21, the fresh air integrated machine 1 first determines whether the user has a need for non-cooling and non-dehumidification. If so, the fresh air integrated machine 1 enters the introducing fresh air and circulating air without cooling and dehumidifying status; if not, the fresh air integrated machine 1 enters the introducing only fresh air status.

In a case where the fresh air integrated machine is in the introducing fresh air and circulating air without cooling and dehumidifying status, according to the difference between the fresh air humidity and the set humidity, and the temperature difference between the set temperature and the return air temperature of the first heat exchanger 31, the first heat exchanger 31 and the third heat exchanger 33 may have the statuses such as: the first heat exchanger serving as an evaporator and the third heat exchanger serving as a condenser, only the first heat exchanger serving as an evaporator, and both the first heat exchanger and the third heat exchanger being turned off. It will be noted that in a case where the first heat exchanger and the third heat exchanger are in the status of "only the first heat exchanger serving as an evaporator", since the fresh air and the circulating air share the third heat exchanger, in a case where there is no need to cooling and dehumidification at the circulating air side, the temperature of the fresh air may be adjusted through the first heat exchanger.

Similarly, at the circulating air side, according to the difference between the circulating air humidity and the set humidity, and the temperature difference between the set temperature and the return air temperature of the second heat exchanger 32, the second heat exchanger 32 and the third heat exchanger 33 may have three statuses such as: the second heat exchanger serving as an evaporator and the third heat exchanger serving as a condenser, the second heat exchanger serving as an evaporator, and both the second heat exchanger and the third heat exchanger being turned off.

It will be noted that in a case where the fresh air integrated machine is in the introducing fresh air and circulating air without cooling and dehumidifying status, since the third heat exchanger 33 is shared by the fresh air and the circulating air, the opening and closing of the third heat exchanger 33 need to be determined uniformly according to the needs of both the fresh air and the circulating air.

Continuing to refer to FIG. 21, in a case where the fresh air integrated machine is in the only introducing fresh air status, according to the compressor status, the temperature difference between the set temperature and the return air temperature of the first heat exchanger, the fresh air integrated machine may have three sub-statuses such as: only introducing fresh air and cooling, only introducing fresh air and heating, and machine shutdown. The three sub-statuses are similar to the statuses under the circulating air only condition below, reference may be made to the below related description, and details will not be repeated here.

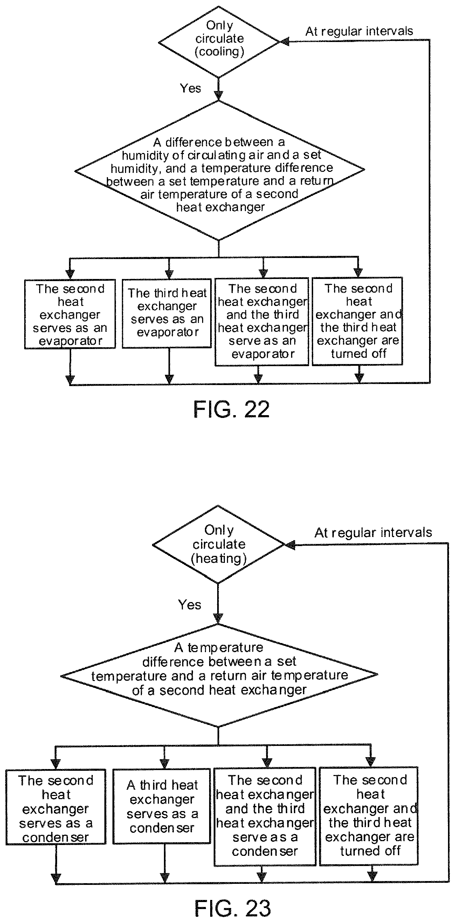

FIG. 22 is a flow chart of an operational principle of a fresh air integrated machine in an only introducing fresh air and cooling status, in accordance with some embodiments. Referring to FIGS. 5 and 22, after the fresh air integrated machine 1 is determined to enter the introducing only circulating air and cooling status, based on the difference between the circulating air humidity and the set humidity, and the temperature difference between the set temperature and the return air temperature of the second heat exchanger 32, the second heat exchanger 32 and the third heat exchanger 33 may have four statuses such as: only the second heat exchanger serving as an evaporator, only the third heat exchanger serving as an evaporator, both the second heat exchanger and the third heat exchanger serving as an evaporator, and both the second heat exchanger and the third heat exchanger being turned off.

FIG. 23 is a flow chart of an operational principle of a fresh air integrated machine in an only introducing fresh air and heating status, in accordance with some embodiments. Referring to FIGS. 5 and 23, after the fresh air integrated machine 1 is determined to enter the introducing only circulating air and heating status, according to the temperature difference between the set temperature and the return air temperature of the second heat exchanger 32, the second heat exchanger 32 and the third heat exchanger 33 may have four statuses such as: only the second heat exchanger serving as a condenser, only the third heat exchanger serving as a condenser, both the second heat exchanger and the third heat exchanger serving as a condenser, and the second heat exchanger and the third heat exchanger being turned off.

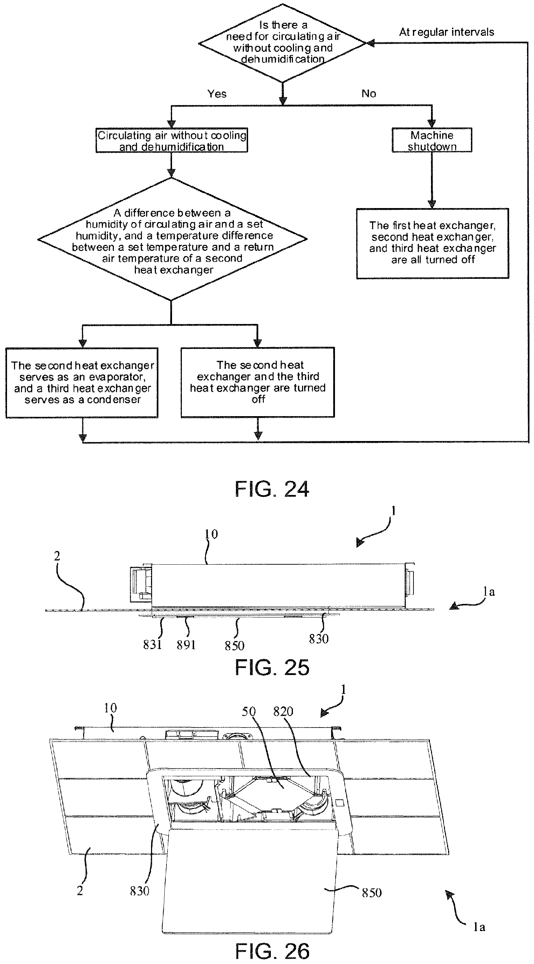

FIG. 23 is a flow chart of an operational principle of a fresh air integrated machine in an only introducing circulating air without cooling and dehumidifying status or in a machine shutdown status, in accordance with some embodiments. Referring to FIGS. 5 and 24, the fresh air integrated machine determines whether the user has a need for non-cooling and non-dehumidification. If so, the fresh air integrated machine enters the only introducing circulating air without cooling and dehumidifying status; if not, the fresh air integrated machine enters the machine shutdown status.

In a case where the fresh air integrated machine is in the only introducing circulating air without cooling and dehumidifying status, according to the difference between the circulating air humidity and the set humidity, and the temperature difference between the set temperature and the return air temperature of the second heat exchanger 32, the second heat exchanger 32 and the third heat exchanger 33 may have two statuses such as the second heat exchanger serving as an evaporator and the third heat exchanger serving as a condenser, and both the second heat exchanger and the third heat exchanger being turned off.

In the "machine shutdown" state, the first heat exchanger 31, the second heat exchanger 32 and the third heat exchanger 33 are all turned off.

FIGS. 25 and 26 are structural diagrams of a fresh air integrated machine installed on a suspended ceiling, in accordance with some embodiments. Referring to FIGS. 25 and 26, when installing the fresh air integrated machine 1 in the user's home, the fresh air integrated machine 1 may be hoisted on the roof or embedded in the suspended ceiling 2. During the use of the fresh air integrated machine 1, components in the fresh air integrated machine 1, such as the heat exchange member 50, need to be regularly serviced and maintained.

In order to facilitate the service and maintenance of the components in the fresh air integrated machine 1, the fresh air integrated machine 1 further includes an overhauling opening 820, a mounting frame 830 and an overhauling panel 850 disposed at a bottom 1a (i.e., a portion of the fresh air integrated machine 1 proximate to the suspended ceiling 2).

The overhauling opening 820 is disposed on the housing 10. The heat exchange member 50 is located above the overhauling opening 820. Or, the overhauling opening 820 may expose at least a portion of the heat exchange member 50. This present disclosure does not limit the size of the overhauling opening 820, and the overhauling opening 820 may also expose other components in the housing 10.

The mounting frame 830 is disposed around the overhauling opening 820 and protrudes from the overhauling opening 820 downward (i.e., towards a direction in which the overhauling opening 820 is away from the heat exchange member 50). When installing the fresh air integrated machine 1 in the user's home, a main structure of the fresh air integrated machine 1 (e.g., a portion including the heat exchange member 50) may be fixedly installed above the suspended ceiling 2 of the user's home, that is, at a side of the suspended ceiling 2 proximate to the roof. Correspondingly, the mounting frame 830 extends downward and is located below the suspended ceiling 2, that is, at a side of the suspended ceiling 2 away from the roof.

The overhauling panel 850 is movably disposed on the mounting frame 830. Furthermore, the overhauling panel 850 covers the overhauling opening 820 when the overhauling panel 850 is in a closed state.

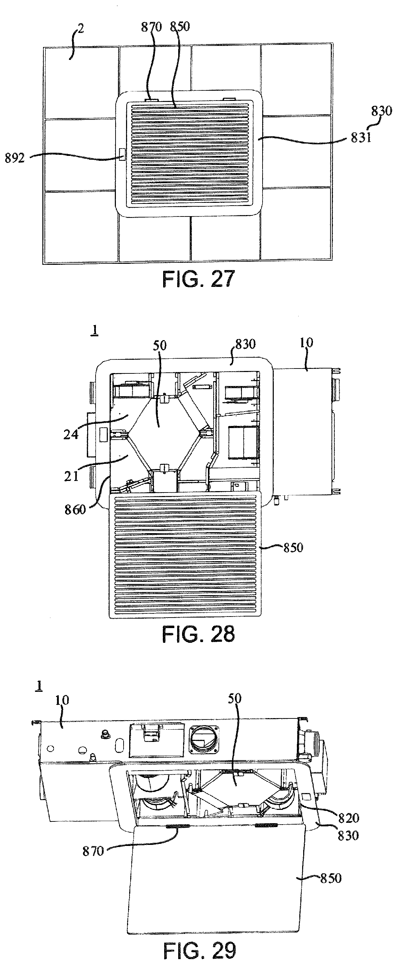

Since a portion of the mounting frame 830 may be located below the suspended ceiling 2, the overhauling panel 850 disposed on the mounting frame 830 may be located below the suspended ceiling 2. In addition, the overhauling panel 850 may cover the overhauling opening 820. As shown in FIG. 27, FIG. 27 is a structural diagram of the fresh air integrated machine observed by the user when the user looks upward at the fresh air integrated machine. During normal use of the fresh air integrated machine, in a case where the user looks upward, the user may only see a portion of the mounting frame 830 (e.g., a flange 831, which will be described below) and the overhauling panel 850, and the overhauling opening 820 will not be exposed. In this way, the fresh air integrated machine 1 has a good appearance effect after being installed in the user's home.

In addition, referring to FIG. 26, since the overhauling panel 850 is movably disposed on the mounting frame 830, when it is necessary to repair components inside the housing 10, the operator may open the overhauling panel 850 to expose the overhauling opening 820. In addition, since the overhauling opening 820 may expose a part of components (e.g., the heat exchange member 50) disposed in the housing 10, the operator may maintain related components through the overhauling opening 820.

The size of the overhauling opening 820 may be designed according to the components that need to be maintained, so as to satisfy the overhauling requirements of the relevant components inside the housing 10.

The switch of the overhauling panel 850 may be implemented through various structural forms. Hereinafter, various structural forms that implement the switch of the overhauling panel 850 will be described in detail below.

FIG. 28 is a diagram showing a structure of another fresh air integrated machine, in accordance with some embodiments. Referring to FIG. 28, in some embodiments, the overhauling panel 850 is slidably disposed on the mounting frame 830. The overhauling panel 850 is capable of sliding back and forth on the mounting frame 830. During the sliding process, the overhauling panel 850 is opened or closed to expose or cover the overhauling opening 820.

For example, the fresh air integrated machine further includes a slide rail 860. The slide rail 860 is disposed on the mounting frame 830. The overhauling panel 850 is slidably mounted on the slide rail 860. In this way, the overhauling panel 850 is capable of sliding back and forth through the guide of the slide rail 860, which may improve the installation reliability of the overhauling panel 850.

FIG. 29 is a diagram showing a structure of another fresh air integrated machine, in accordance with some embodiments. Referring to FIG. 29, in some embodiments, the overhauling panel 850 is rotatably disposed on mounting frame 830.

For example, the overhauling panel 850 may be flipped downward, so that the overhauling panel 850 is opened to expose the overhauling opening 820. For example, the fresh air integrated machine further includes a hinge 870. The hinge 870 is disposed on the mounting frame 830, and the overhauling panel 850 is installed on the hinge 870. In this way, the overhauling panel 850 is installed on the mounting frame 830 through the hinge 870. The overhauling panel 850 may be flipped around the hinge 870.

In a case where the overhauling panel 850 is in the closed state, that is, the overhauling panel 850 covers the overhauling opening 820, the overhauling panel 850 may be limited and fixed by latches, screws, etc., which may prevent the overhauling panel 850 from flipping open due to an action of gravity.

For another example, the overhauling panel 850 is rotated horizontally, so that the overhauling panel 850 is opened to expose the overhauling opening 820. For example, the overhauling panel 850 rotates horizontally in a plane parallel to a plane in which the mounting frame 830 is located. In some possible implementations, the fresh air integrated machine further includes a rotatable installation shaft. The rotatable installation shaft is disposed on the mounting frame 830, and the overhauling panel 850 is disposed on the rotatable installation shaft. In this way, the overhauling panel 850 is disposed on the mounting frame 830 through the installation shaft. Taking the installation shaft as an axis, the overhauling panel 850 may be opened by horizontally rotating the overhauling panel 850, so as to expose the overhauling opening 820. Taking the installation shaft as an axis, the overhauling panel 850 may be closed by rotating the overhauling panel 850 in an opposite direction, so as to cover the overhauling opening 820.

In some embodiments, the overhauling panel 850 has a separate structure. For example, in a case where the size of the overhauling opening 820 is large, it is convenient for the operator to open and close the overhauling panel 850.

For example, the overhauling panel 850 includes a plurality of sub-panels disposed on the mounting frame. The plurality of sub-panels are spliced together to form a whole that may cover the overhauling opening 820. Since the overhauling panel 850 is composed of the plurality of sub-panels, compared with the overhauling panel 850 having a monolithic structure, the weight and area of a single sub-panel may be less, thereby making it easier for the operator to operate. In addition, when operating the overhauling panel 850, the operator may also switch the corresponding sub-panel according to actual needs. For example, during the actual maintenance operation, in a case of repairing only a small component in the housing, a corresponding sub-panel under the component may be switched on and off, thereby making it easier for the operator to operate.

In some embodiments, the sub-panels are opened and closed in a horizontal rotational manner. In this case, the overhauling panel 850 includes two sub-panels that rotate relative to each other. In some other embodiments, the sub-panels are opened and closed in a sliding manner. In this case, the overhauling panel 850 includes two sub-panels that slide relative to each other. In yet some other embodiments, the sub-panels are opened and closed in a flipping manner. In this case, the overhauling panel 850 includes two sub-panels disposed in a form of double doors.

Referring to FIG. 27, in some embodiments, the mounting frame 830 includes a flange 831 on which the overhauling panel 850 is movably disposed. The flange 831 may extend outwards from the overhauling opening along an extension direction of the suspended ceiling 2. In this way, the mounting frame 830 with the flange 831 has better load-bearing capacity, which is conducive to improving the installation reliability of the fresh air integrated machine. In addition, the flange 831 may block the connection portion between the mounting frame 830 and the suspended ceiling 2, which is conducive to optimizing the overall appearance of the fresh air integrated machine and the suspended ceiling.

Referring to FIG. 25, in some embodiments, the fresh air integrated machine 1 further includes a lighting lamp 891. For example, the lighting lamp 891 is disposed on the flange 831. In this way, the space occupied by the flange 831 may be used to install the lighting lamp 891, which may make the structure of the fresh air integrated machine 1 more compact. In addition, since the flange 831 is located below the suspended ceiling 2, the lighting lamp 891 disposed on the flange 831 may illuminate or decorate the room, which may enrich the functions of the fresh air integrated machine.

Referring to FIG. 27, in some embodiments, the fresh air integrated machine 1 further includes a display screen 892. For example, the display screen 892 is disposed on the flange 831. The user may learn the operating status of the fresh air integrated machine through the display screen 892, and the user may further perform human-computer interaction through the display screen 892.

In some embodiments, the overhauling panel 850 is further provided with a detachable decorative panel, which may satisfy the user's requirements for appearance and enable the user to obtain a good use experience.

The foregoing descriptions are merely specific implementations of the present disclosure, but the protection scope of the present disclosure is not limited thereto. Changes or replacements that any person skilled in the art could conceive of within the technical scope of the present disclosure, as well as combinations of various features made without conflict, shall be included in the protection scope of the present disclosure. Therefore, the protection scope of the present disclosure shall be subject to the protection scope of the claims.

## Claims

1. A fresh air integrated machine, comprising:
a housing;
a fresh air channel disposed in the housing; an inlet end of the fresh air channel being communicated to the outdoors, and an outlet end of the fresh air channel being communicated to a first end of an air mixing cavity; the fresh air channel being configured to introduce outdoor air into the air mixing cavity;
a circulating air channel disposed in the housing; an inlet end of the circulating air channel being communicated to indoors, an outlet end of the circulating air channel being communicated to a second end of the air mixing cavity; the circulating air channel being configured to introduce indoor air into the air mixing cavity;
the air mixing cavity disposed in the housing; a third end of the air mixing cavity being communicated to the indoors; the air mixing cavity being configured to mix and introduce the outdoor air introduced by the fresh air channel and the indoor air introduced by the circulating air channel into indoors;
a first heat exchanger disposed in the fresh air channel and configured to adjust humidity and temperature of air in the fresh air channel;
a second heat exchanger disposed in the circulating air channel, and configured to adjust humidity and temperature of air in the circulating air channel; a third heat exchanger disposed in the air mixing cavity and configured to adjust humidity and temperature of air in the air mixing cavity.

2. The fresh air integrated machine according to claim 1, wherein
in a case where the outdoor air flows into indoors through the fresh air channel and the air mixing cavity, the first heat exchanger is configured to be turned on on demand according to humidity of fresh air in the fresh air channel to adjust the humidity of the fresh air, and the third heat exchanger is configured to be turned on on demand according to temperature of the fresh air to adjust temperature of gas flowing into indoors.

3. The fresh air integrated machine according to claim 1, wherein
in a case where the indoor air flows into indoors through the circulating air channel and the air mixing cavity, the second heat exchanger is configured to be turned on on demand according to humidity of circulating air in the circulating air channel to adjust the humidity of the circulating air, and the third heat exchanger is configured to be turned on on demand according to temperature of the circulating air to adjust the temperature of gas flowing into indoors.

4. The fresh air integrated machine according to claim 1, wherein
in a case where the outdoor air flows into indoors through the fresh air channel and the air mixing cavity, and the indoor air flows into indoors through the circulating air channel and the air mixing cavity, the first heat exchanger is configured to be turned on on demand according to humidity of fresh air in the fresh air channel to adjust the humidity of the fresh air, the second heat exchanger is configured to be turned on on demand according to humidity of circulating air in the circulating air channel to adjust the humidity of the circulating air, and the third heat exchanger is configured to be turned on on demand according to temperature of gas in the air mixing cavity to adjust the temperature of the gas flowing into indoors.

5. The fresh air integrated machine according to any one of claims 1 to 4, further comprising:
an exhaust channel disposed in the housing; an inlet end of the exhaust channel being communicated to the indoors, and an outlet end of the exhaust channel being communicated to the outdoors; the exhaust channel being configured to discharge the indoor air to the outdoors; and
a heat exchange member disposed in the housing; both the fresh air channel and the exhaust channel running through the heat exchange member; air in the fresh air channel and air in the exhaust channel exchanging heat with each other through the heat exchange member.

6. The fresh air integrated machine according to claim 5, wherein
the housing is formed with a first cavity and a second cavity therein;
the fresh air channel includes a first fresh air channel section and a second fresh air channel section; an inlet end of the first fresh air channel section is the inlet end of the fresh air channel, an outlet end of the first fresh air channel section is communicated to an inlet end of the second fresh air channel section, and an outlet end of the second fresh air channel section is the outlet end of the fresh air channel;
the first fresh air channel section, the exhaust channel and the heat exchange member are disposed in the first cavity, and both the second fresh air channel section and the exhaust channel run through the heat exchange member; the second fresh air channel section, the circulating air channel and the air mixing cavity are disposed in the second cavity;
the first heat exchanger is disposed in the second fresh air channel section.

7. The fresh air integrated machine according to claim 6, wherein
the housing is formed with a bypass channel therein; an inlet end of the bypass channel is communicated to the inlet end of the first fresh air channel section, and an outlet end of the bypass channel is communicated to the circulating air channel.

8. The fresh air integrated machine according to claim 7, further comprising:
a bypass air valve disposed at the outlet end of the bypass channel;
a first air valve disposed at a connection between the first fresh air channel section and the second fresh air channel section.

9. The fresh air integrated machine according to any one of claims 6 to 8, further comprising:
a first fan disposed in the exhaust channel;
a third fan disposed in the second fresh air channel section;
a fourth fan disposed in the circulating air channel.

10. The fresh air integrated machine according to any one of claims 1 to 8, further comprising:
a first fan disposed in the exhaust channel;
a second fan disposed in the air mixing cavity.

11. The fresh air integrated machine according to any one of claims 1 to 10, further comprising:
a heating component disposed at the inlet end of the fresh air channel.

12. The fresh air integrated machine according to any one of claims 1 to 11, further comprising:
a plurality of air valves disposed at an inlet end of an exhaust channel and the inlet end of the circulating air channel.

13. The fresh air integrated machine according to claim 5, wherein
the housing is provided with an overhauling opening, and the overhauling opening exposes at least a portion of the heat exchange member;
a mounting frame surrounds the overhauling opening and protrudes from the overhauling opening in a direction away from the heat exchange member;
an overhauling panel is movably disposed on the mounting frame, and the overhauling panel covers the overhauling opening when in a closed state.

14. The fresh air integrated machine according to claim 13, wherein
the overhauling panel is slidably disposed on the mounting frame.

15. The fresh air integrated machine according to claim 14, further comprising:
a slide rail disposed on the mounting frame, and the overhauling panel being slidably installed on the slide rail.

16. The fresh air integrated machine according to claim 13, wherein
the overhauling panel is rotatably disposed on the mounting frame.

17. The fresh air integrated machine according to claim 16,
further comprising: a hinge disposed on the mounting frame, and the overhauling panel being installed on the hinge; or,
the fresh air integrated machine further includes: a rotatable installation shaft; the rotatable installation shaft being disposed on the mounting frame, and the overhauling panel being installed on the rotatable installation shaft.

18. The fresh air integrated machine according to claim 13, wherein
the overhauling panel includes a plurality of sub-panels disposed on the mounting frame; in a case where the plurality of sub-panels are in a closed state, the plurality of sub-panels are spliced together to cover the overhauling opening.

19. The fresh air integrated machine according to any one of claims 13 to 18, wherein
the mounting frame includes a flange, and the overhauling panel is movably disposed on the flange.

20. The fresh air integrated machine according to claim 19, further comprising:
a lighting lamp and/or a display screen disposed on the flange.
